# EUROPÄISCHE PATENTSCHRIFT

(11) **EP 1 479 003 B1**
(45) Veröffentlichungstag und Bekanntmachung des Hinweises auf die Patenterteilung: **09.04.2014**
(21) Anmeldenummer: 02805736.2
(22) Anmeldetag: 20.12.2002
(51) Int. Cl.: G06F 11/07, G06F 11/30

(54) **VERFAHREN UND VORRICHTUNG ZUR STEUERUNG EINER FUNKTIONSEINHEIT EINES KRAFTFAHRZEUGS**
METHOD AND DEVICE FOR CONTROLLING THE FUNCTIONAL UNIT OF A MOTOR VEHICLE
PROCEDE ET DISPOSITIF DE COMMANDE D'UNE UNITE FONCTIONNELLE D'UN VEHICULE AUTOMOBILE

(30) Priorität: 21.12.2001 DE 10163655
(43) Veröffentlichungstag der Anmeldung: 24.11.2004
(73) Patentinhaber: ROBERT BOSCH GMBH, 70442 Stuttgart (DE)
(72) Erfinder: FUNCKE, Guido, 74354 Besigheim-Ottmarsheim (DE); KELLER, Stefan, 71735 Eberdingen (DE)
(86) Internationale Anmeldenummer: PCT/DE2002/004695
(87) Internationale Veröffentlichungsnummer: WO 2003/056427

(56) Entgegenhaltungen:
- EP-A- 0 512 240
- EP-A- 0 996 060
- WO-A-97/33083
- US-A- 5 844 795

## Beschreibung

Die Erfindung betrifft ein Verfahren und eine Vorrichtung zur Steuerung einer Funktionseinheit eines Kraftfahrzeugs, insbesondere zur Steuerung der Antriebseinheit. Weiterhin betrifft die Erfindung ein Computerprogramm zur Durchführung des Verfahrens.

### Stand der Technik

Zur Steuerung der Funktionseinheiten eines Kraftfahrzeugs werden Steuergeräte eingesetzt, die Funktionsprogramme zur Steuerung der betreffenden Einheit zur Ausführung bringen. Zur Gewährleistung der korrekten Funktionsweise ist es notwendig, den fehlerfreien Ablauf des Funktionsprogramms zu überprüfen. Hierzu dienen sogenannte Sicherheitsprogramme, die ebenfalls in den Steuergeräten zur Ausführung kommen. Um zusätzliche Sicherheit zu bieten, ist es üblich, daß auch diese Sicherheitsprogramme überwacht werden. Hierzu dienen typischerweise sogenannte Überwachungsmodule, die diese Sicherheitsprogramme überwachen.

Bei elektronischen Steuergeräten werden heutzutage oft Einrechnerkonzepte eingesetzt. Für diese Konzepte existieren Überwachungskonzepte, die auch im Fehlerfall einen sicheren Betrieb ermöglichen. Dazu wird das Funktionsprogramm mit Hilfe des Sicherheitsprogramms kontrolliert. Dies erfolgt grundsätzlich so, daß die Eingangsgröße des Steuergerätes, die den Fahrerwunsch wiedergibt, mit den leistungsbestimmenden Stellgrößen verglichen wird. Das Sicherheitsprogramm läuft wie das Funktionsprogramm im Funktionsrechner, der im Steuergerät enthalten ist, ab. Der korrekte Programmablauf des Sicherheitsprogramms wird durch spezielle Softwarestrukturen und durch einen geeigneten Kommunikationsablauf zwischen dem Funktionsrechner und dem Überwachungsmodul sichergestellt. zeitliche und wertmäßige Abweichungen der Sicherheitssoftware werden vom Überwachungsmodul erkannt. Im Fehlerfall werden die leistungsbestimmenden Stellgrößen deaktiviert und/oder ein Reset des Funktionsrechners ausgelöst.

Aus der Druckschrift DE 44 38 714 A1 ist ein Verfahren und eine Vorrichtung zur Steuerung der Antriebseinheit eines Fahrzeugs bekannt. Das beschriebene Verfahren dient insbesondere zur Steuerung einer Antriebseinheit eines Fahrzeugs, wobei die Leistung der Antriebseinheit abhängig von Vorgabewerten zumindest in einem Betriebszustand des Fahrzeugs gesteuert wird. Es werden außerdem Funktionen zur Leistungssteuerung sowie zur Überwachung der korrekten Funktionsweise der Leistungssteuerung durchgeführt. Zur Leistungssteuerung ist lediglich ein einzelnes Rechenelement vorgesehen, das sowohl die Steuerung als auch die Überwachung durchführt. Es sind wenigstens zwei zumindest außerhalb des Fehlerfalls voneinander unabhängige Ebenen im Rechenelement vorgesehen, wobei die erste Ebene die Steuerung und die zweite Ebene die Überwachung durchführt. Es kann zusätzlich eine dritte Ebene vorgesehen sein, die die Funktionsweise des Rechners durch Überwachung der die Überwachung durchführenden Ebene überprüft. Die Überwachung der Funktionsweise des ersten Rechenelements wird durch einen Vergleich des Fahrerwunsches mit der Stellung des die Luft zuvor beeinflussenden Elements durchgeführt.

Die Druckschrift DE 41 14 999 A1 beschreibt ein System zur Steuerung eines Kraftfahrzeugs mit einer ersten Einrichtung zur Bestimmung der zur Steuerung des Kraftfahrzeugs benötigten Steuerdaten und einer zweiten Einrichtung zur Überwachung der ersten Einrichtung. Die erste Einrichtung ermittelt ausgehend von ersten Daten gemäß einer Prüffunktion zweite Daten, und die zweite Einrichtung ermittelte von den ersten Daten ausgehend dritte Daten gemäß der Prüffunktion. Die erste und/oder die zweite Einrichtung erkennt anhand eines Vergleichs zwischen den zweiten und den dritten Daten einen sicherheitsrelevanten Fehlerzustand. Die beiden Einrichtungen verarbeiten somit im Rahmen eines Frage-Antwort-Spiels Signalwerte, wobei die zweite Einrichtung durch Vergleich der Ergebnisse dieser Verarbeitung auf das korrekte oder das fehlerhafte Arbeiten des Mikrorechners schließt.

Weiterhin zeigt die WO 97/33083 ein Verfahren und eine Vorrichtung zur Steuerung einer Antriebseinheit eines Fahrzeugs, bei welchem die Steuerfunktionen für die Leistung der Antriebseinheit und die Überwachung dieser Steuerfunktionen von einem einzigen Mikrocomputer durchgeführt werden. Zur Überprüfung der Überwachungsfunktionen ist ein vom Mikrocomputer getrenntes Überwachungsmodul vorgesehen, welches zu gegebener Zeit Testsignale an den Mikrocomputer sendet, der dann die Überwachungsfunktion auf der Basis von Testdaten berechnet. Das Ergebnis der Berechnung wird dem Überwachungsmodul übermittelt, welches durch Vergleich mit gespeicherten Werten die Funktionsfähigkeit der Funktionsüberwachung im Mikrocomputer überprüft. Hierbei wird also der Mikrocomputer bezüglich seiner Programmstruktur im Wesentlichen in drei Ebenen aufgeteilt, wobei in einer ersten Ebene Programme zur Durchführung der Steuerung für die Antriebseinheit zusammengefasst werden und in der zweiten Ebene diejenigen Programme zusammengefasst werden, die zur Funktionsüberwachung der Steuerfunktionen der ersten Programmebene dienen. Daneben wird eine dritte Ebene aufgebaut, in denen Programme zur Ablaufkontrolle der Funktionsüberwachung der zweiten Ebene zusammengefasst sind und mit welchen die genannte Kommunikation mit dem Überwachungsmodul abläuft.

Nachteilig bei den bekannten Verfahren ist, dass selbst bei geringfügiger Modifikation des Funktionsprogramms das komplette Sicherheitsprogramm überarbeitet werden muss.

### Vorteile der Erfindung

Die Erfindung wird in den unabhängigen Ansprüchen definiert. Weitere vorteilhalfte Ausführungen werden in den abhängigen Ansprüchen beschrieben.

Ein Verfahren zur Steuerung einer Funktionseinheit eines Kraftfahrzeugs sieht vor, daß ein

Funktionsablauf in einem Funktionsprogramm durchgeführt wird, das von einem Sicherheitsprogramm überprüft wird. Das Sicherheitsprogramm wird von einem Überwachungsmodul überwacht. Das Funktionsprogramm weist einen modularen Aufbau auf, das heißt, es besteht aus mehreren Programmodulen. Das Sicherheitsprogramm weist einen entsprechenden Aufbau auf. Die Anzahl der Programmodule des Funktionsprogramms entspricht somit der Anzahl der Module des Sicherheitsprogramms. Die Überwachung des Sicherheitsprogramms wird folglich entsprechend der Anzahl der Module in mehreren Stufen durchgeführt.

Jedem Programmodul ist somit ein Modul des Sicherheitsprogramms zugewiesen, das ausschließlich das zugewiesene Funktionsprogrammodul überprüft.

Jedes Modul des Sicherheitsprogramms liefert einen Teilbeitrag, so daß das Überwachungsmodul die Gesamtheit der Teilbeiträge auswertet.

Die Teilbeiträge werden über einen Decoder dem Überwachungsmodul zugeleitet. Der Decoder faßt die Teilbeiträge zusammen und übersetzt das Ergebnis in ein Wort bestimmter Länge. Die Art der Zusammenfassung der Teilbeiträge für die Kommunikation mit dem Überwachungsmodul in einem Decoder kann entfallen, wenn der Teilbeitrag aus einem der Module des Sicherheitsprogramms genutzt wird, um den Teilbeitrag für ein weiteres Modul zu erzeugen und somit die Teilbeiträge zwischen den einzelnen Modulen des Sicherheitsprogramms weitergegeben werden. Dann enthält der zuletzt erhaltene Teilbeitrag Teilbeiträge aus allen anderen Modulen.

Vorzugsweise erfolgt die Überwachung dadurch, daß von dem Überwachungsmodul Prüfdaten an das Sicherheitsprogramm gegeben werden, von dem Sicherheitsprogramm Ausgangsdaten ermittelt werden und zur Überwachung des Sicherheitsprogramms die Ausgangsdaten den Prüfdaten gegenübergestellt werden. Auf diese Weise kann durch das Überwachungsmodul festgestellt werden, ob unter Berücksichtigung der Prüfdaten korrekte Ausgangsdaten ermittelt werden. Nur wenn dies der Fall ist, läuft das Sicherheitsprogramm fehlerfrei.

Auch die Überwachung mit Hilfe des Sicherheitsprogramms erfolgt jetzt nicht mehr, wie im Stand der Technik, in einer Stufe, sondern entsprechend der Anzahl der Module in mehreren Stufen.

Eine Vorrichtung zur Steuerung einer Funktionseinheit eines Kraftfahrzeugs umfaßt eine Recheneinheit, üblicherweise einen Mikrocomputer. Auf diesem kommt ein Funktionsprogramm und ein das Funktionsprogramm überprüfendes Sicherheitsprogramm zur Ausführung. Zusätzlich ist ein Überwachungsmodul zum Überwachen des Sicherheitsprogramms vorgesehen. Bei der erfindungsgemäßen Vorrichtung ist das Funktionsprogramm modular aufgebaut, das heißt, es besteht aus mehreren Programmodulen. Das Sicherheitsprogramm weist einen entsprechenden Aufbau auf. Die Überwachung des Sicherheitsprogramms ist folglich in mehreren Stufen, deren Anzahl der Zahl der Module des Sicherheitsprogramms bzw. der Anzahl der Programmodule entspricht, durchzuführen. Die Stufen werden sequentiell oder parallel zueinander durchgeführt.

Es bietet sich an, daß die Programmodule und die Module des Sicherheitsprogramms, die Sicherheitsmodule, jeweils in getrennten Speichereinheiten abgelegt sind.

Ein Decoder zur Weiterleitung von Teilbeiträgen ist vorgesehen, wobei jedes Sicherheitsmodul einen Teilbeitrag liefert.

Als Überwachungsmodul kann bspw. ein Microcontroller oder eine Gatter-Logik dienen.

Ein Computerprogramm weist Programmcodemittel auf, um alle Schritte eines erfindungsgemäßen Verfahrens durchzuführen, wenn das Computerprogramm auf einer entsprechenden Recheneinheit durchgeführt wird. Die Recheneinheit ist vorzugsweise in einer erfindungsgemäßen Vorrichtung, einem Steuergerät, vorgesehen.

Ein Computerprogrammprodukt weist Programmcodemittel auf, die auf einem computerlesbaren Datenträger gespeichert sind. Die Programmcodemittel dienen zur Durchführung des erfindungsgemäßen Verfahrens.

Weitere Vorteile und Ausgestaltungen der Erfindung ergeben sich aus der Beschreibung und der beiliegenden Zeichnung.

Es versteht sich, daß die vorstehend genannten und die nachstehend noch zu.erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Zeichnung

Die Erfindung ist anhand von Ausführungsbeispielen in der Zeichnung dargestellt und wird im Folgenden unter Bezugnahme auf die Zeichnung näher erläutert.
- Figur 1: zeigt ein Steuergerät nach dem Stand der Technik in schematischer Darstellung.
- Figur 2: zeigt eine bevorzugte Ausführungsform der erfindungsgemäßen Vorrichtung in schematischer Darstellung.
- Figur 3: zeigt eine bevorzugte Ausführungsform des erfindungsgemäßen Verfahrens in einem Flußdiagramm.

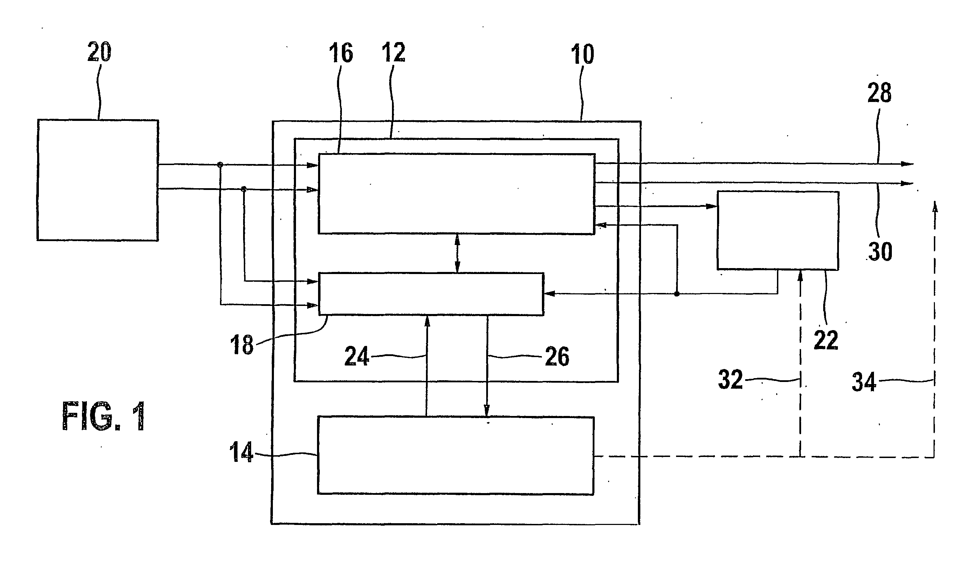

In Figur 1 ist ein Steuergerät 10 nach dem Stand der Technik dargestellt. Das Steuergerät 10 dient zur Steuerung eines Systems für ein elektronisches Gaspedal (EGAS).

Zu erkennen ist eine Recheneinheit (Funktionsrechner) 12 und ein Überwachungsmodul 14. In der Recheneinheit 12 ist ein Funktionsprogramm 16 und ein Sicherheitsprogramm 18 gezeigt.

Über ein Pedal 20 gibt ein Fahrer des Kraftfahrzeugs den Fahrerwunsch an das Steuergerät 10 weiter. Der Fahrerwunsch als Eingangsgröße wird von dem Funktionsprogramm 16 bearbeitet und von diesem eine Ausgangsgröße für eine vorzugsweise elektrisch angetriebene Drosselklappe 22 ausgegeben.

Der Fahrerwunsch als Eingangsgröße wird auch an das Sicherheitsprogramm 18 gegeben, das das Funktionsprogramm 16 kontrolliert, indem der Fahrerwunsch anhand der leistungsbestimmenden Stellgrößen, die von der Drosselklappe 22 erhalten werden, plausibilisiert werden.

Für das dargestellte Einrechnerkonzept existiert ein Überwachungskonzept, das auch im Fehlerfall einen sicheren Betrieb ermöglicht. Dazu wird, wie zuvor geschildert, das Funktionsprogramm 16 mit Hilfe des Sicherheitsprogramms 18 kontrolliert. Der Grundgedanke ist dabei die Plausibilisierung des Fahrerwunsches (z. B. Pedal) mit den leistungsbestimmenden Stellgrößen (z. B. Drosselklappenstellung). Das Sicherheitsprogramm 18 kommt wie das Funktionsprogramm 16 in der Recheneinheit 12 zur Ausführung. Der korrekte Programmablauf des Sicherheitsprogramms 18 wird durch spezielle Softwarestrukturen und durch einen geeigneten Kommunikationsablauf zwischen der Recheneinheit 12 und dem Überwachungsmodul 14 sichergestellt. Zeitliche und wertmäßige Abweichungen der Sicherheitssoftware 18 werden von dem Überwachungsmodul 14 erkannt. Im Fehlerfall werden die leistungsbestimmenden Stellgrößen deaktiviert und/oder ein Reset des Funktionsrechners 12 ausgelöst. Dazu werden, wie mit einem Pfeil 24 verdeutlicht, von dem Überwachungsmodul 14 Prüfdaten an das Sicherheitsprogramm 18 gesendet, das wiederum diese Prüfdaten verarbeitet und auf Grundlage dieser Prüfdaten Ausgabedaten ermittelt und, wie mit einem Pfeil 26 verdeutlicht, diese an das Überwachungsmodul 14 sendet. Mit diesen Ausgabedaten kann das Überwachungsmodul 14 die fehlerfreie Ausführung des Sicherheitsprogramms 18 überwachen.

Das Funktionsprogramm 16 gibt Daten zur Steuerung der Zündung, wie mit einem Pfeil 28 gezeigt, und Daten zur Steuerung der Einspritzung, wie mit einem Pfeil 30 verdeutlicht, aus. Stellt das Überwachungsmodul 14 einen Fehler fest, kann dieses bewirken, wie mit einem gestrichelten Pfeil 32 gezeigt, daß die Betätigung der Drosselklappe 22 unterbleibt, und wie mit einem Pfeil 34 verdeutlicht, daß die Betätigung der Zündung und der Einspritzung nicht durchgeführt wird.

Das Sicherheitsprogramm 18 überprüft somit anhand der Eingabedaten des Steuergeräts 10, ob diese plausibel sind, währenddessen das Überwachungsmodul 14 die korrekte Funktionsweise des Sicherheitsprogramms 18 überwacht.

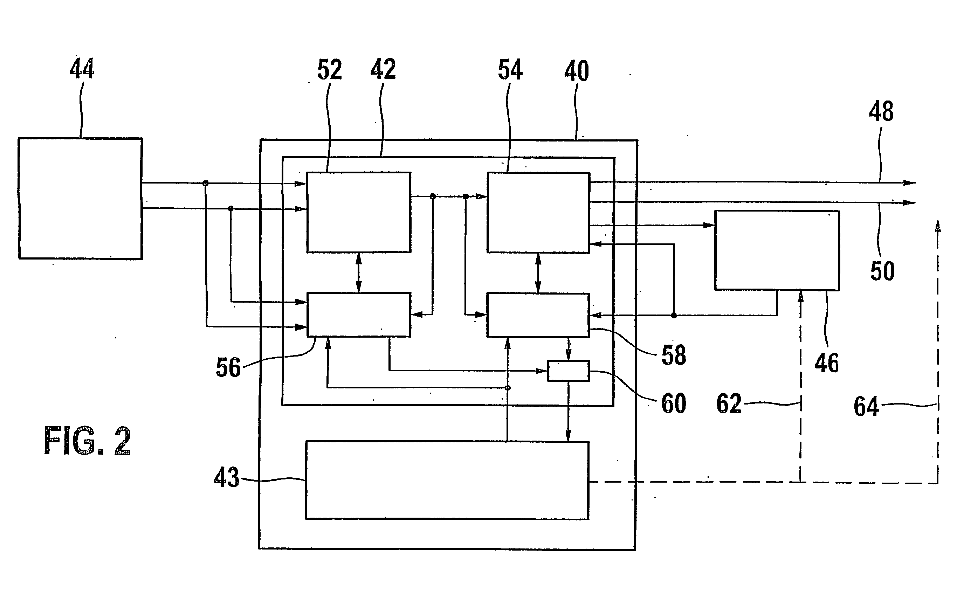

In Figur 2 ist eine bevorzugte Ausführungsform der erfindungsgemäßen Vorrichtung, nämlich ein erfindungsgemäßes Steuergerät 40 wiedergegeben. Das Steuergerät 40 umfaßt eine Recheneinheit 42 und ein Überwachungsmodul 43. Das Steuergerät 40 dient zur Bearbeitung von Daten, die von einem EGAS ausgegeben werden, und zur Ansteuerung einer Drosselklappe 46, der Zündung, wie mit einem Pfeil 48 verdeutlicht, und der Einspritzung, wie mit einem Pfeil 50 gezeigt.

Zu erkennen ist, daß das Funktionsprogramm aus einem Programmodul I 52 und einem Programmodul II 54 zusammengesetzt ist. Entsprechend weist das Sicherheitsprogramm ein Sicherheitsmodul I 56 und ein Sicherheitsmodul II 58 auf. Des weiteren ist in der Recheneinheit 42 bzw. dem Funktionsrechner 42 ein Decoder 60 erhalten. Durch geeignete Schnittstellenfestlegung ist der Funktionsumfang des Funktionsprogramms somit in zwei Programmodule 52, 54 getrennt. Passend zu diesen zwei Programmodulen 52, 54 sind zwei zugehörige Sicherheitsmodule 56, 58 im Funktionsrechner 42 realisiert. Die Schnittstelle zwischen den Programmteilen, nämlich dem Programmodul 1 52 und dem Programmodul II 54 ist dabei so spezifiziert, daß mit Hilfe des Sicherheitsmoduls I 56 das Programmodul 1 52 überwacht wird. Entsprechend wird das Programmodul II 54 durch das Sicherheitsmodul II 58 überwacht.

Damit erfolgt die Überwachung jetzt nicht mehr in einer Stufe (Plausibilisierung des Fahrerwunsches mit den leistungsbestimmenden Stellgrößen), sondern in zwei Stufen. Die erste Stufe beinhaltet die Plausibilisierung des Fahrerwunsches mit den definierten Schnittstellengrößen. Die zweite Stufe beinhaltet die Plausibilisierung der definierten Schnittstellengrößen mit den leistungsbestimmenden Stellgrößen.

Der korrekte Programmablauf der beiden Sicherheitsmodule 56, 58 wird wie bisher durch spezielle Softwarestrukturen durch einen geeigneten Kommunikationsablauf zwischen dem Funktionsrechner 42 und dem Überwachungsmodul 43 sichergestellt. Dazu stellt sowohl das Sicherheitsmodul I 56 als auch das Sicherheitsmodul II 58 mit Hilfe geeigneter Algorithmen jeweils einen Teilbeitrag für die Kommunikation mit dem Überwachungsmodul bereit. Der Decoder 60 faßt die Teilbeiträge zusammen und gibt das Gesamtergebnis als ein von dem Überwachungsmodul 43 lesbares Wort einer bestimmten Bitlänge an das Überwachungsmodul 43 weiter. Zeitliche und wertmäßige Abweichungen der beiden Sicherheitsmodule 56, 58 werden damit wieder vom Überwachungsmodul 43 erkannt. Im Fehlerfall werden die leistungsbestimmenden Stellgrößen deaktiviert und/oder ein Reset des Funktionsrechners 42 ausgelöst. Dies ist durch einen Pfeil 62 und einen Pfeil 64 verdeutlicht.

Die erfindungsgemäße Vorrichtung ermöglicht unabhängige Entwicklungsprozesse für die einzelnen Programmodule sowie für die einzelnen Sicherheitsmodule. Dies ermöglicht eine Vereinfachung einer verteilten Entwicklung mit der Möglichkeit, unabhängige Softwaremodule zu entwickeln und einzusetzen. Teile des Funktionsprogramms können modular austauschbar gestaltet werden. Entsprechend dem Funktionsprogramm muß dann nur der entsprechende Teil des Sicherheitsprogramms ausgetauscht werden, ohne wie bisher das komplette Sicherheitsprogramm zu überarbeiten.

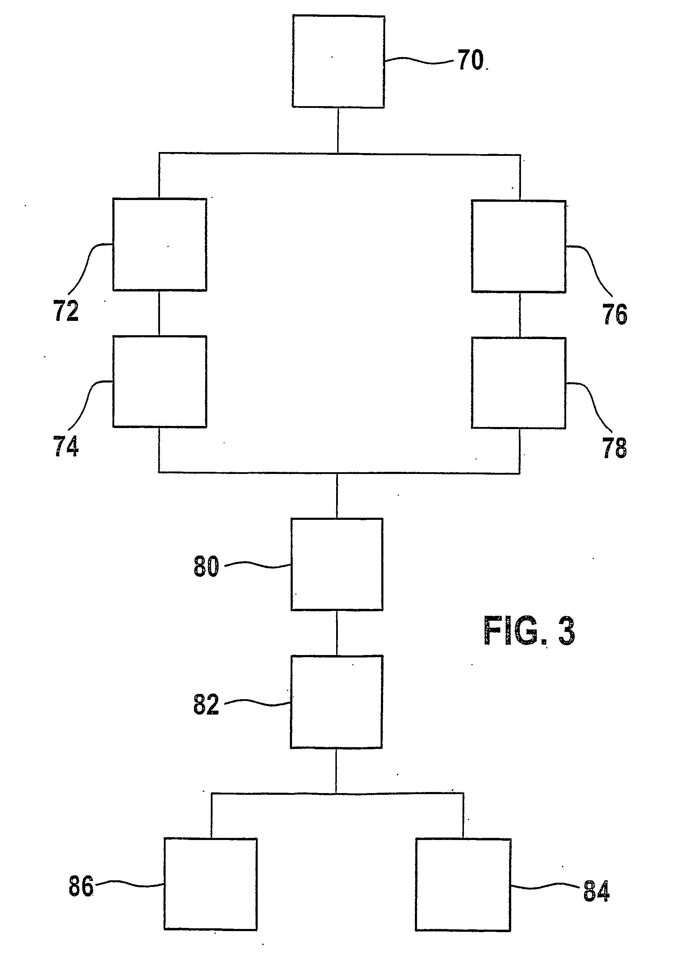

In Figur 3 ist eine bevorzugte Ausführungsform des erfindungsgemäßen Verfahrens in einem Flußdiagramm dargestellt.

In einem Schritt 70 wird das Funktionsprogramm gestartet. Während der Programmbearbeitung und Überprüfung der Eingangsdaten durch das Sicherheitsprogramm wird in einer ersten Stufe 72 das Sicherheitsmodul I 56 überwacht, indem dieses zunächst von dem Überwachungsmodul 43 Prüfdaten erhält. In einem Schritt 74 ermittelt das Sicherheitsmodul I 56 Ausgangsdaten, den sogenannten Teilbeitrag. Entsprechend wird das Sicherheitsmodul II 58 in einem Schritt 76 überwacht und liefert ebenfalls in einem Schritt 78 einen Teilbeitrag.

Bei der gezeigten Ausführungsform erfolgt die Überprüfung der Sicherheitsmodule 56, 58 zeitgleich. Es ist durchaus denkbar, daß die Überwachung sequentiell abläuft, d. h. zunächst das Sicherheitsmodul I 56 überwacht wird und anschließend das Sicherheitsmodul II 58 überwacht wird.

Die Teilbeiträge der Sicherheitsmodule 56, 58 werden an den Decoder 60 in einem Schritt 80 gegeben. Dieser setzt in einem Schritt 82 die Teilbeiträge zusammen und gibt das Ergebnis an das Überwachungsmodul 43 weiter.

Das Überwachungsmodul 43 prüft das erhaltene Ergebnis anhand der ausgegebenen Daten und entscheidet, ob ein Fehler vorliegt. In diesem Fall werden in einem Schritt 84 die leistungsbestimmenden Stellgrößen deaktiviert. Bei korrekter Funktionsweise der Sicherheitsmodule 56, 58 werden die Stellgrößen in einem Schritt 86 freigegeben.

Die Art der Zusammenfassung der Teilbeiträge für die Kommunikation mit dem Überwachungsmodul 43 in einem Decoder 60 kann entfallen, wenn der Teilbeitrag aus dem Sicherheitsmodul I 56 genutzt wird, um den Teilbeitrag für das Sicherheitsprogramm II 58 zu erzeugen. In diesem Fall umfaßt der Teilbeitrag des Sicherheitsmoduls II 58 automatisch einen Teilbeitrag aus dem Sicherheitsmodul I 56.

Bei zukünftigen Entwicklungsarbeiten wird immer häufiger Wert auf eine Aufgabenverteilung gelegt. Die Erfindung ermöglicht nunmehr die mehrfache Verwendung von Teilprogrammen, ohne daß dabei eine komplette Überarbeitung des Gesamtsystems notwendig ist.

## Patentansprüche

1. Verfahren zur Steuerung einer Funktionseinheit eines Kraftfahrzeugs, bei dem ein Funktionsablauf in einem Funktionsprogramm durchgeführt wird, das von einem Sicherheitsprogramm überprüft wird, das wiederum von einem Überwachungsmodul (43) überwacht wird, wobei das Funktionsprogramm einen modularen Aufbau aufweist, das heißt aus mehreren Programmmodulen (52, 54) besteht und das Sicherheitsprogramm einen entsprechenden, ebenfalls modularen, Aufbau besitzt, das heißt eine Anzahl von Sicherheitsmodulen (56, 58) aufweist, so dass die Überwachung des Sicherheitsprogramms entsprechend der Anzahl der Sicherheitsmodule (56, 58) in mehreren Stufen durchgeführt wird, indem jedem Programmmodul des Funktionsprogramms wenigstens ein Sicherheitsmodul zugeordnet ist, bei dem die einzelnen Sicherheitsmodule (56, 58) des Sicherheitsprogramms jeweils einen Teilbeitrag liefern und alle Teilbeiträge zur Auswertung dem Überwachungsmodul (43) zugeleitet werden, **dadurch gekennzeichnet, dass** die Teilbeiträge zwischen den einzelnen Sicherheitsmodulen (56, 58) des Sicherheitsprogramms weitergegeben werden, wobei die von einem weiterem Modul erhaltenen Teilbeträge anderer Module benutzt werden um den Teilbetrag des weiteren Moduls zu erzeugen und so der letzte erhaltene Teilbetrag Teilbeträge aus allen Modulen enthält.

2. Verfahren nach Anspruch 1, bei dem die Überwachung dadurch erfolgt, dass Prüfdaten an das Sicherheitsprogramm gegeben werden, von dem Sicherheitsprogramm Ausgangsdaten ermittelt werden und zur Überwachung des Sicherheitsprogramms die Ausgangsdaten den Prüfdaten gegenübergestellt werden.

3. Vorrichtung zur Steuerung einer Funktionseinheit eines Kraftfahrzeuges, die eine Recheneinheit (42) umfasst, auf der ein Funktionsprogramm und ein das Funktionsprogramm überprüfendes Sicherheitsprogramm zur Ausführung kommen, und zusätzlich ein Überwachungsmodul (43) zum Überwachen des Sicherheitsprogramms vorgesehen ist, wobei das Funktionsprogramm modular aufgebaut ist, das heißt aus mehreren Programmmodulen (52, 54) besteht und das Sicherheitsprogramm einen entsprechenden modularen Aufbau besitzt, das heißt eine Anzahl von Sicherheitsmodulen (56, 58) aufweist, so dass die Überwachung des Sicherheitsprogramms entsprechend der Anzahl der Sicherheitsmodule (56, 58) in mehreren Stufen durchführbar ist, indem jedem Programmmodul des Funktionsprogramms wenigstens ein Sicherheitsmodul zugeordnet ist, bei dem die einzelnen Sicherheitsmodule (56, 58) des Sicherheitsprogramms jeweils einen Teilbeitrag liefern und alle Teilbeiträge zur Auswertung dem Überwachungsmodul (43) zugeleitet werden, **dadurch gekennzeichnet, dass** die Teilbeiträge zwischen den einzelnen Sicherheitsmodulen (56, 58) des Sicherheitsprogramms weitergegeben werden, wobei die von einem weiterem Modul erhaltenen Teilbeträge anderer Module benutzt werden um den Teilbetrag des weiteren Moduls zu erzeugen und so der letzte erhaltene Teilbetrag Teilbeträge aus allen Modulen enthält.

4. Vorrichtung nach Anspruch 3, bei dem die Programmodule (52, 54) und die Sicherheitsmodule (56, 58) jeweils in getrennten Speichereinheiten gespeichert sind.

5. Vorrichtung nach einem der Ansprüche 3 oder 4, bei der als Überwachungsmodul (43) ein Mikrocontroller dient.

6. Vorrichtung nach einem der Ansprüche 3 bis 5, bei der als Überwachungsmodul (43) eine Gatterlogik dient.

7. Computerprogramm mit Programmcodemitteln, um alle Schritte eines Verfahrens nach einem der Ansprüche 1 oder 2 durchzuführen, wenn das Computerprogramm auf einem Computer oder einer entsprechenden Recheneinheit, insbesondere einer Recheneinheit (42) in einer Vorrichtung (40) nach Anspruch 3, durchgeführt wird.

8. Computerprogrammprodukt mit Programmcodemitteln, die auf einem computerlesbaren Datenträger gespeichert sind, um ein Verfahren nach einem der Ansprüche 1 oder 2 durchzuführen, wenn das Computerprogramm auf einem Computer oder auf einer entsprechenden Recheneinheit, insbesondere einer Recheneinheit (42) in einer Vorrichtung (40) nach Anspruch 3, ausgeführt wird.

## Claims

1. Method for controlling a functional unit of a motor vehicle, in which a functional sequence is carried out in a functional program which is checked by a safety program which is in turn monitored by a monitoring module (43), wherein the functional program has a modular design, that is to say is composed of a plurality of program modules (52, 54), and the safety program has a corresponding design, which is also modular, that is to say has a number of safety modules (56, 58), with the result that the monitoring of the safety program is carried out in a plurality of stages in accordance with the number of safety modules (56, 58) in that each program module of the functional program is assigned at least one safety module in which the individual safety modules (56, 58) of the safety program each make a partial contribution and all the partial contributions are fed to the monitoring module (43) for evaluation, **characterized in that** the partial contributions are passed on between the individual safety modules (56, 58) of the safety program, wherein the partial contribution of another module which is received from a further module is used to generate the partial contribution of the further module, and the last partial contribution received therefore contains partial contributions from all the modules.

2. Method according to Claim 1, in which the monitoring is carried out in that check data are transferred to the safety program, output data are determined by the safety program, and the output data are compared with the check data in order to monitor the safety program.

3. Device for controlling a functional unit of a motor vehicle, which device comprises a computer unit (42) on which a functional program and a safety program which checks the functional program are carried out, and additionally a monitoring module (43) is provided for monitoring the safety program, wherein the functional program is of modular design, that is to say is composed of a plurality of program modules (52, 54), and the safety program has a corresponding modular design, that is to say has a number of safety modules (56, 58), with the result that the monitoring of the safety program can be carried out in a plurality of stages in accordance with the number of safety modules (56, 58) in that each program module of the functional program is assigned at least one safety module in which the individual safety modules (56, 58) of the safety program each make a partial contribution and all the partial contributions are fed to the monitoring module (43) for evaluation, **characterized in that** the partial contributions are passed on between the individual safety modules (56, 58) of the safety program, wherein the partial contribution of another module which is received from a further module is used to generate the partial contribution of the further module, and the last partial contribution received therefore contains partial contributions from all the modules.

4. Device according to Claim 3, in which the program modules (52, 54) and the safety modules (56, 58) are each stored in separate memory units.

5. Device according to one of Claims 3 or 4, in which a microcontroller serves as the monitoring module (43).

6. Device according to one of Claims 3 to 5, in which a gate logic serves as the monitoring module (43).

7. Computer program with program code means for carrying out all the steps of a method according to one of Claims 1 or 2 when the computer program is executed on a computer or a corresponding computer unit, in particular a computer unit (42) in a device (40) according to Claim 3.

8. Computer program product having program code means which are stored on a computer-readable data carrier in order to carry out a method according to one of Claims 1 or 2 when the program code means are carried out on a computer or a corresponding computer unit, in particular a computer unit (42) in a device (40) according to Claim 3.

## Revendications

1. Procédé de commande d'une unité fonctionnelle d'un véhicule automobile, dans lequel le déroulement d'une fonction est exécuté dans un programme de fonction vérifié par un programme de sécurité qui lui-même est surveillé par un module de surveillance (43),
le programme de fonction présentant une structure modulaire, autrement dit étant constitué de plusieurs modules (52, 54) de programme, et le programme de sécurité possédant une structure correspondante, également modulaire, c'est-à-dire présentant plusieurs modules de sécurité (56, 58), de telle sorte que la surveillance du programme de sécurité est exécutée en plusieurs étapes en correspondance au nombre des modules de sécurité (56, 58) par le fait qu'au moins un module de sécurité est associé à chaque module du programme fonctionnel, les différents modules de sécurité (56, 58) du programme de sécurité fournissant chacun une contribution partielle et toutes les contributions partielles étant amenées pour évaluation au module de surveillance (43),
**caractérisé en ce que**
les contributions partielles sont échangées entre les différents modules de sécurité (56, 58) du programme de sécurité, la contribution partielle obtenue par un module étant utilisée par un autre module pour former la contribution partielle de ce module, la dernière contribution partielle obtenue contenant les contributions partielles de tous les modules.

2. Procédé selon la revendication 1, dans lequel la surveillance s'effectue par le fait que des données de vérification sont délivrées au programme de sécurité, des données de sortie sont déterminées par le programme de sécurité et des données de sortie sont comparées aux données de vérification pour surveiller le programme de sécurité.

3. Dispositif de commande d'une unité fonctionnelle d'un véhicule automobile, le dispositif présentant une unité de calcul (42) sur laquelle un programme fonctionnel et un programme de sécurité vérifiant le programme fonctionnel sont exécutés, et comportant de plus un module de surveillance (43) qui surveille le programme de sécurité, le programme fonctionnel ayant une structure modulaire, en d'autres termes étant constitué de plusieurs modules de programme (52, 54), le programme de sécurité possédant une structure modulaire correspondante, c'est-à-dire présentant plusieurs modules de sécurité (56, 58), de telle sorte que la surveillance du programme de sécurité puisse être exécutée en plusieurs étapes en correspondance au nombre des modules de sécurité (56, 58), par le fait qu'au moins un module de sécurité est associé à chaque module du programme fonctionnel, les différents modules de sécurité (56, 58) du programme de sécurité fournissant chacun une contribution partielle et toutes les contributions partielles étant amenées pour évaluation au module de surveillance (43),
**caractérisé en ce que**
les contributions partielles sont échangées entre les différents modules de sécurité (56, 58) du programme de sécurité, la contribution partielle obtenue par un module étant utilisée par un autre module pour former la contribution partielle de ce module, la dernière contribution partielle obtenue contenant les contributions partielles de tous les modules.

4. Dispositif selon la revendication 3, dans lequel les modules de programme (52, 54) et les modules de sécurité (56, 58) sont conservés dans des unités de mémoire séparées.

5. Dispositif selon l'une des revendications 3 ou 4, dans lequel un microcontrôleur sert de module de surveillance (43).

6. Dispositif selon l'une des revendications 3 à 5, dans lequel une grille logique sert de module de surveillance (43).

7. Programme informatique doté de moyens de code de programme qui permettent d'exécuter toutes les étapes d'un procédé selon l'une des revendications 1 ou 2 lorsque le programme informatique est exécuté sur un ordinateur ou sur une unité de calcul appropriée, notamment une unité de calcul (42) d'un dispositif (40) selon la revendication 3.

8. Produit de programme informatique doté de moyens de code de programme conservés en mémoire sur un support de données lisible par ordinateur et permettant d'exécuter toutes les étapes d'un procédé selon l'une des revendications 1 ou 2 lorsque les moyens de codes de programme sont exécutés sur un ordinateur ou sur une unité de calcul appropriée, notamment une unité de calcul (42) d'un dispositif (40) selon la revendication 3.
